# EUROPÄISCHE PATENTSCHRIFT

(11) **EP 0 538 893 B1**
(45) Veröffentlichungstag und Bekanntmachung des Hinweises auf die Patenterteilung: **06.09.1995**
(21) Anmeldenummer: 92118213.5
(22) Anmeldetag: 23.10.1992
(51) Int. Cl.: B62D 53/08

(54) **Sattelzugfahrzeug**
Coupling saddle for semi-trailer vehicle
Sellette d'attelage pour véhicule semi-remorque

(30) Priorität: 25.10.1991 DE 4135288
(43) Veröffentlichungstag der Anmeldung: 28.04.1993
(73) Patentinhaber: ROCKINGER Spezialfabrik für Anhängerkupplungen GmbH & Co., D-80904 München (DE)
(72) Erfinder: Schneider, Frank, Dipl.-Ing., W-8038 Gröbenzell (DE); Engler, Thomas, Dipl.-Ing., W-8000 München 50 (DE)
(74) Vertreter: Weickmann, Heinrich, Dipl.-Ing.

(56) Entgegenhaltungen:
- DE-A- 3 033 364
- FR-A- 2 322 044
- GB-A- 2 126 966
- US-A- 2 996 312

## Beschreibung

Die Erfindung betrifft ein Sattelzugfahrzeug, umfassend einen Zugfahrzeugrahmen mit mindestens zwei Längsträgern und einem auf dem Zugfahrzeugrahmen angeordneten Sattelkupplungsbausatz, letzterer ausgeführt mit Lagerböcken und einer auf den Lagerböcken um eine quer zur Fahrtrichtung verlaufende Achse schwenkbar gelagerten Sattelplatte, wobei die Lagerböcke mit in Fahrtrichtung länglichen Fußteilen im Bereich der Längsträger oberhalb dieser an dem Zugfahrzeugrahmen befestigt sind und wobei die Höhe der Auflagefläche der Sattelplatte über dem Längsträger variabel ist.

Die im Hinblick auf unterschiedliche Bedürfnisse verschiedener Fahrzeugbetreiber (Tankfahrzeuge, Schwerlastfahrzeuge, Volumentransporter) bestehende Forderung nach Variabilität der Höhe der Auflagefläche der Sattelplatte gegenüber der Achshöhe oder der Fahrfläche ist seit langem gelöst. Es wird verwiesen auf die DE 30 33 364 A1, in welcher zur Höhenanpassung der Auflagefläche sogenannte Montageplatten variabler Höhe vorgeschlagen sind, d.h. Montageplatten, welche bei üblichen Zugfahrzeugrahmen mit zwei in Fahrtrichtung verlaufenden Längsträgern diese Längsträger überbrücken und an den Längsträgern entweder unmittelbar oder unter Vermittlung von Hilfs-Rahmenteilen befestigt sind. Es wird weiter darauf verwiesen, daß zur Erhaltung unterschiedlicher Höhen der Auflagefläche auch Kupplungsbausätze unterschiedlicher Höhe von den Kupplungsherstellern hergestellt und angeboten worden sind. Dies ist erneut dokumentiert in dem Entwurf einer DIN-Norm 74081 vom Mai 1991, in der verschiedene Bauhöhen für den Kupplungsbausatz von beispielsweise 150, 175, 200, 250 mm vorgeschlagen sind.

In Abweichung von den bisher bekannten, der Höhenvariationen der Auflagefläche dienenden Maßnahmen wird erfindungsgemäß vorgeschlagen, daß die Höhe der Auflagefläche durch annähernd dem Umriß der Fußteile entsprechende, in Fahrtrichtung längliche, den einzelnen Fußteilen zuzuordnende Bauhöhenadapter variabel ist, welche einerseits mit dem jeweiligen Fußteil und andererseits mit dem Zugfahrzeugrahmen zumindest bezüglich der Fahrtrichtung in formschlüssige Verbindung treten.

Es werden also in einem Industriezweig, in dem grundsätzlich die Tendenz besteht, aus Fertigungsgründen, Lagerhaltungsgründen, Anpassungsgründen und Stabilitätsgründen mit möglichst wenigen kraftübertragenden Bauteilen auszukommen, zusätzliche Bauteile, nämlich die Bauhöhenadapter, vorgeschlagen. Es hat sich gezeigt, daß diese der allgemeinen Tendenz zuwiderlaufende Maßnahme zur Lösung des an sich längst gelösten Problems vorteilhaft sein kann. Der Kupplungshersteller wird durch die Bereitstellung der Bauhöhenadapter von der Notwendigkeit entlastet, Kupplungsbausätze unterschiedlicher Höhe und insbesondere Lagerböcke unterschiedlicher Höhe als Teile für solche Kupplungsbausätze bereitzustellen. Dieser Vorteil wird erst dann verständlich, wenn man bedenkt, daß die Lagerböcke komplizierte Werkstücke, insbesondere Gußteile, sind. Demgegenüber lassen sich die Bauhöhenadapter verhältnismäßig preisgünstig bereitstellen. Der Vorteil, mit einer einzigen Größe von Lagerböcken Kupplungsbausätze unterschiedlicher Bauhöhe durch Einsatz von Bauhöhenadaptern bereitstellen zu können, überwiegt den Nachteil, daß zusätzliche Teile, nämlich die Bauhöhenadapter, ggf. in unterschiedlichen Größen, bereitgehalten werden müssen. Im übrigen kann dieser Nachteil dadurch relativiert werden, daß ein und derselbe Bauhöhenadapter-Typ für beide Lagerböcke verwendet werden kann, insbesondere dann, wenn die Bauhöhenadapter symmetrisch ausgebildet werden in bezug auf eine in ihrer Längsebene quer zur Fahrtrichtung gelegene vertikale Symmetrieebene. Die in der oben formulierten Tendenz zum Ausdruck kommende Befürchtung, daß durch Vergrößerung der Teilezahl insgesamt die Stabilität leiden könnte, läßt sich dadurch ausräumen, daß entsprechend der Erfindung ein formschlüssiger Eingriff zwischen den Fußteilen und dem Bauhöhenadapter vorgesehen wird. Auch wenn man den für die Herstellung solcher formschlüssiger Verbindungen entsprechenden Formgebungsufwand in Betracht zieht, erweist sich die Kombination von Lagerböcken einheitlicher Abmessungen mit unterschiedlichen Bauhöhenadaptern immer noch als kostengünstiger als die Bereitstellung von Lagerböcken unterschiedlicher Höhe.

Es ist aber durchaus auch denkbar, anstelle eines gesonderten Bauhöhenadapters für jeden Lagerbock eine Bauhöhen-Adapterplatte vorzusehen, welche beiden Lagerböcken gemeinsam zugeordnet ist.

Erfindungsgemäß ist es möglich, daß die Höhe der Auflagefläche durch Bauhöhenadapter unterschiedlicher Höhe variabel ist. Zur Bereitstellung der in dem Entwurf der DIN-Norm 74081 aufgeführten Bauhöhen (150, 175, 200, 250 mm) sind, beispielsweise ausgehend von einer Grundbauhöhe von Lagerbock und Sattelplatte von 150 mm, drei verschiedene Arten von Bauhöhenadaptern mit einer Höhe von 25, 50 und 100 mm vorzusehen. Durch die Beilage lediglich eines einzelnen Bauhöhenadapters können Beeinträchtigungen der Stabilität des Sattelkupplungsbausatzes weitgehend vermieden werden.

Alternativ hierzu ist es jedoch auch möglich, daß die Höhe der der Auflagefläche durch Übereinanderanordnung zweier oder mehrerer Bauhöhenadapter variabel ist, die ihrerseits zumindest bezüglich der Fahrtrichtung miteinander in formschlüssige Verbindung treten. Dies hat den Vorteil, daß zur Variation zur Höhe der Auflagefläche lediglich eine geringe Anzahl von Arten von Bauhöhenadaptern verschiedener Bauhöhen bereitgestellt werden müssen. Würde beispielsweise zur Erzielung der in dem Entwurf zur DIN-Norm 74081 aufgeführten Bauhöhen die Bereitstellung zweier Sorten von Bauhöhenadaptern mit einer Höhe von 25 und 50 mm genügen und es müßten höchstens zwei derartige Bauhöhenadapter übereinander angeordnet werden.

Wenn die Bauhöhenadapter zur Anbringung auf einer Montageplatte ausgebildet sind, welche auf den Längsträgern befestigt ist, so ist es möglich, die Bauhöhenadapter auf dieselbe Weise zu befestigen, wie bislang die Fußteile der Lagerböcke. Hierbei ist es bevorzugt, daß die Montageplatte auf den Längsträgern durch Hilfsrahmenteile befestigt ist, da hierdurch die Stabilität des Fahrzeugrahmens unbeeinträchtigt bleiben kann.

Eine besonders einfache Befestigung der Lagerböcke wird dadurch ermöglicht, daß die Fußteile auf dem Zugfahrzeugrahmen durch Zugbolzen befestigt sind, welche die Fußteile und die Bauhöhenadapter durchdringen. Um hierbei vermeiden zu können, daß die Zugbolzen beim Betrieb der Sattelkupplung Scherkräften unterworfen werden, wird vorgeschlagen, daß zur formschlüssigen Festlegung der Fußteile an dem jeweiligen Bauhöhenadapter und zur formschlüssigen Festlegung des jeweiligen Bauhöhenadapters an dem Zugfahrzeugrahmen in Fahrtrichtung und ggf. quer zur Fahrtrichtung wirksame Anschlagflächen an den Fußteilen, den Bauhöhenadaptern und dem Zugfahrzeugrahmen vorgesehen sind.

Die Anschlagflächen zwischen Fußteilen und Bauhöhenadaptern sowie ggf. zwischen in Höhenrichtung aufeinanderfolgenden Bauhöhenadaptern können in einfacher Weise durch reliefartige Gestaltung der aneinander anliegenden Flächen von Fußteilen und Bauhöhenadaptern gebildet sein.

Die Stabilität des Sattelkupplungsbausatzes kann weiter dadurch erhöht werden, daß die Anschlagflächen zwischen den Bauhöhenadaptern und dem Zugfahrzeugrahmen auf dem Zugfahrzeugrahmen und ggf. auf einer von dem Zugfahrzeugrahmen getragenen Montageplatte durch Schweißen angebracht sind.

Zur sicheren Vermeidung der Übertragung von Scherkräften auf die Zugbolzen wird weiter vorgeschlagen, daß die Zugbolzen von Bohrungen der Fußteile, der Bauhöhenadapter und des Zugfahrzeugrahmens, ggf. auch der Montageplatte, mit solchem Übermaß aufgenommen sind, daß Kräfte in Fahrtrichtung und ggf. quer zur Fahrtrichtung ausschließlich von den Anschlagflächen aufgenommen werden.

Eine sichere Befestigung des Sattelkupplungsbausatzes auf dem Zugfahrzeugrahmen kann dadurch erzielt werden, daß die Anschlagfläche des Zugfahrzeugrahmens zum wahlweisen oder gleichzeitigen Eingriff mit entsprechenden Gegenanschlagflächen des Fußteils und des bzw. der dem Fußteil zugehörigen Bauhöhenadapter ausgebildet sind.

Die Länge der Befestigungsschrauben verlängert sich bei der erfindungsgemäßen Lösung um die Höhe der Adapter. Dadurch ergibt sich eine größere Dehnlänge der Befestigungsschrauben, was von Vorteil ist.

Die Bauhöhenadapter sind besonders einfach zu fertigen, wenn sie als Gußteile ausgebildet sind.

Die Erfindung wird im folgenden an einem Ausführungsbeispiel anhand der Zeichnungen näher erläutert. Es stellen dar:
- Figur 1: eine Explosionsdarstellung des Sattelkupplungsbereichs eines erfindungsgemäßen Sattelzugfahrzeugs;
- Figur 2: eine Draufsicht auf einen Bauhöhenadapter;
- Figur 3: eine Schnittansicht entlang der Linie III-III in Figur 2;
- Figur 4: eine Schnittansicht entlang der Linie IV-IV in Figur 2;
- Figur 5: eine Draufsicht auf einen Lagerbock;
- Figur 6: eine Schnittansicht entlang der Linie VI-VI;
- Figur 7: eine Schnittansicht entlang der Linie VII-VII in Figur 5; und
- Figur 8: eine teilweise geschnittene Seitenansicht des Kupplungsbereichs eines erfindungsgemäßen Sattelzugs mit unter Zwischenlage eines Bauhöhenadapters befestigter Sattelkupplung.

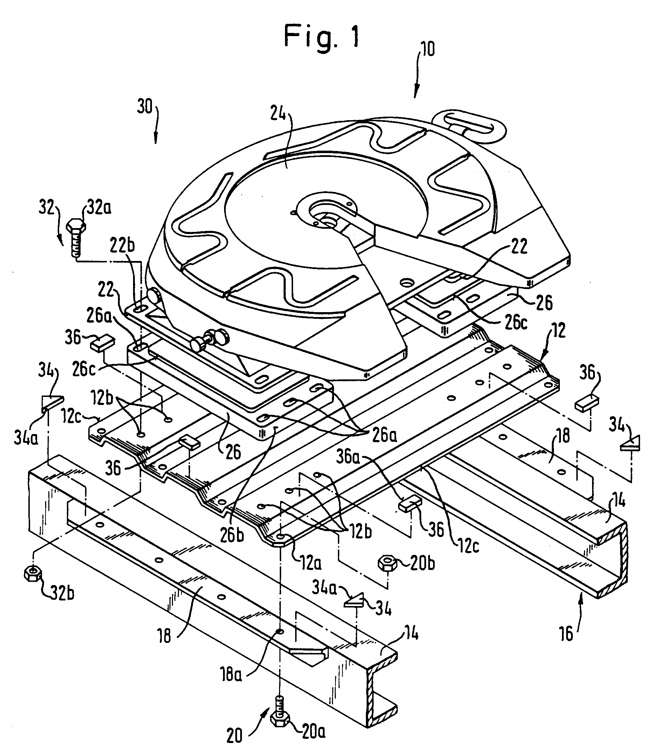

In Fig. 1 ist der Kupplungsbereich eines Sattelzugfahrzeugs als Explosionsdarstellung gezeigt. Eine Sattelkupplung 10 ist auf einer Montageplatte 12 angebracht, welche ihrerseitsan zwei als U-Profil ausgebildeten und sich im wesentlichen in Fahrtrichtung des Sattelzugfahrzeugs erstreckenden Längsträgern 14 des Fahrzeugrahmens 16 befestigt ist. Die Montageplatte 12 ist in Form eines in Fahrtrichtung mehrfach gewellten Wellenprofils ausgebildet, wobei die einzelnen Wellen als Trapezprofilwellen ausgeführt sind.

In den Längsträgern 14 des Fahrzeugrahmens 16 sind vom Fahrzeughersteller Bohrungen zur Befestigung eines Aufbaus, beispielsweise der Sattelkupplung 10, vorgesehen. Weitere Bohrungen dürfen vom Aufbauhersteller nicht in die Längsträger 14 eingebracht werden. An den Längsträgern sind daher Hilfsrahmenelemente 18 befestigt, die die Form eines Winkelprofils aufweisen und in die vom Aufbauhersteller beliebig Bohrungen eingebracht werden dürfen. Die Montageplatte 12 überbrückt die beiden Längsträger 14 des Fahrzeugrahmens 16 und ist mit diesen über die Hilfsrahmenelemente 18 mittelbar verbunden. Hierzu durchsetzen Schraubverbindungen 20, bestehend aus Schraubbolzen 20a und Muttern 20b (in Fig. 1 ist jeweils nur eines dieser Teile dargestellt), Befestigungsbohrungen 12a in der Montageplatte 12 und Befestigungsbohrungen 18a in den Hilfsrahmenelementen 18.

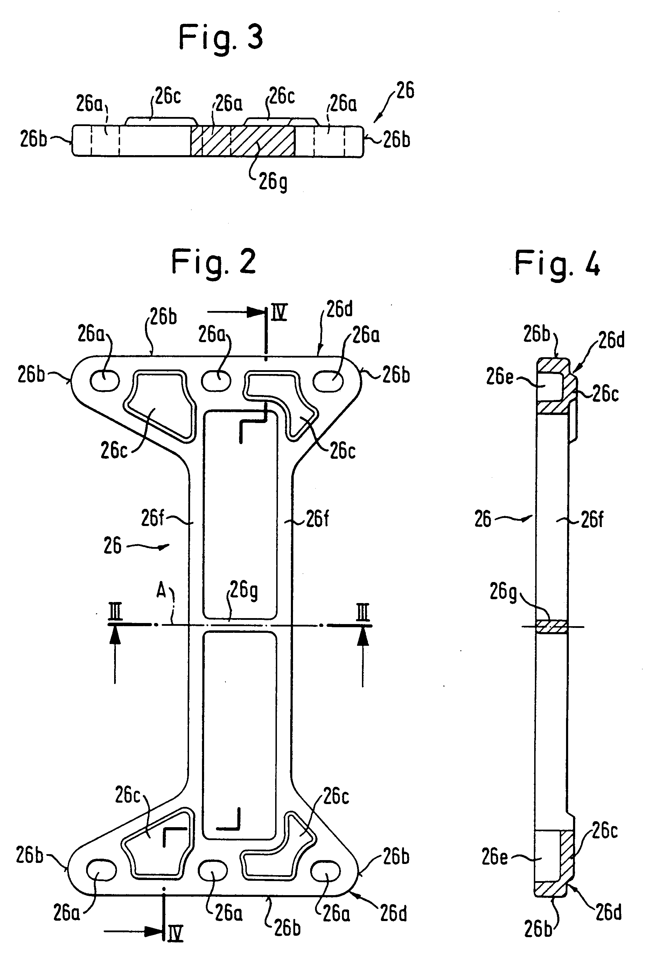

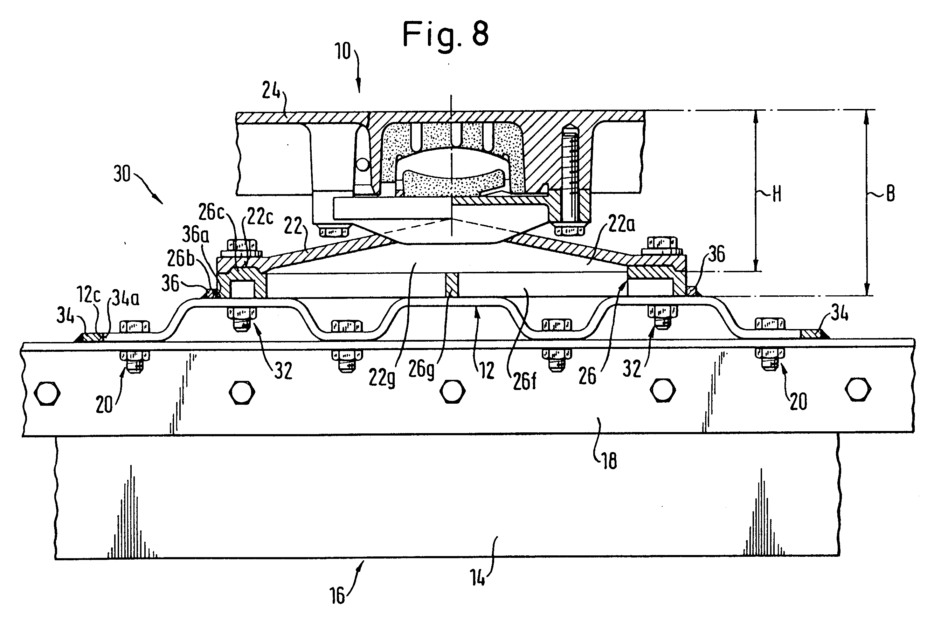

Auf der Montageplatte 12 ist die Sattelkupplung 10 befestigt. Die Sattelkupplung 10 umfaßt gemäß Fig. 1 zwei Lagerböcke 22 und eine auf den Lagerböcken 22 um eine quer zur Fahrtrichtung verlaufende Achse schwenkbar gelagerte Sattelplatte 24. Um mit einer Sattelkupplung einer vorbestimmten Höhe H (gemessen von der Unterkante eines Fußteils 22a eines Lagerbocks 22 bis zur Oberkante der Sattelplatte 24; s. Fig. 8), mehrere, beispielsweise durch den Entwurf der DIN-Norm 74081 vorgegebene Bauhöhen B (im montierten Zustand gemäß Fig. 8 von der Oberkante der Montageplatte 12 bis zur Oberkante der Sattelplatte 24 gemessen) bereitstellen zu können, sind zwischen den Lagerböcken 22 und der Montageplatte 12 Bauhöhenadapter 26 vorgesehen. Die Lagerböcke 22 und die Bauhöhenadapter 26 sind in Fig. 1 nur schematisch dargestellt. Sie werden anhand der Fig. 2 - 7 weiter unten noch näher erläutert werden. Die Sattelkupplung 10 und die Bauhöhenadapter 26 bilden zusammen einen Sattelkupplungsbausatz 30. Zur Befestigung des Sattelkupplungsbausatzes 30 an der Montageplatte 12 sind Schraubverbindungen 32, umfassend Schraubbolzen 32a und Muttern 32b (in Fig. 1 ist jeweils nur eines dieser Teile dargestellt), vorgesehen. Die Schraubbolzen 32a durchsetzen Befestigungsbohrungen 22b,26a und 12b im Lagerbock 22, Befestigungsadapter 26 bzw. in der Montageplatte 12.

Um zu verhindern, daß die beim Betrieb der Sattelkupplung 10 auftretenden Zug-, Schub- und ggf. Seitenkräfte als Scherkräfte auf die Schraubbolzen 20a und 32a der Schraubverbindungen 20 bzw. 32 einwirken, sind zum einen in Fahrtrichtung vor und hinter der Montageplatte 12 Schubbleche 34 auf die Hilfsrahmenelemente 18 aufgeschweißt und zum anderen in Fahrtrichtung vor, hinter und neben den Bauhöhenadaptern 26 Schubbleche 36 auf die Montageplatte 12 aufgeschweißt. Die Schubbleche 34 liegen gemäß Fig. 8 mit Anschlagflächen 34a an Gegenanschlagflächen 12c der Montageplatte 12 formschlüssig an, um jederzeit die von ihr übertragenen Kräfte aufnehmen zu können. Ebenso liegen die Schubbleche 36 mit Anschlagsflächen 36a formschlüssig gegen Gegenanschlagflächen 26b der Bauhöhenadapter 26 an. Die formschlüssige Verbindung zwischen den Fußeilen 22a der Lagerböcke 22 und den Bauhöhenadaptern 26 wird durch reliefartige Vorsprünge 26c der Bauhöhenadapter 26 und entsprechend ausgebildete Ausnehmungen 22c der Fußteile 22a der Lagerböcke 22 gebildet. Hierauf wird bei der Beschreibung der nachfolgenden Figuren noch näher eingegangen werden. Zusätzlich sind zur Vermeidung von Scherkräften auf die Schraubverbindungen 20 und 32 die Bohrungen 12a in der Montageplatte 12 und 18a in den Hilfsrahmenelementen 18, die vom Schraubbolzen 20a durchsetzt werden sowie die Bohrungen 22b in den Lagerböcken 22, die Bohrungen 26a in den Bauhöhenadaptern 26 und die Bohrungen 12b in der Montageplatte 12, die vom Schraubbolzen 32a durchsetzt werden, mit einem derart großen Querschnitt ausgebildet, daß die Schraubbolzen 20a und 32a in ihnen mit Übermaß aufgenommen sind. Somit müssen die Schraubverbindungen 20 und 32 lediglich vertikale Zugkräfte aufnehmen, unterliegen jedoch im wesentlichen keinen Scherkräften.

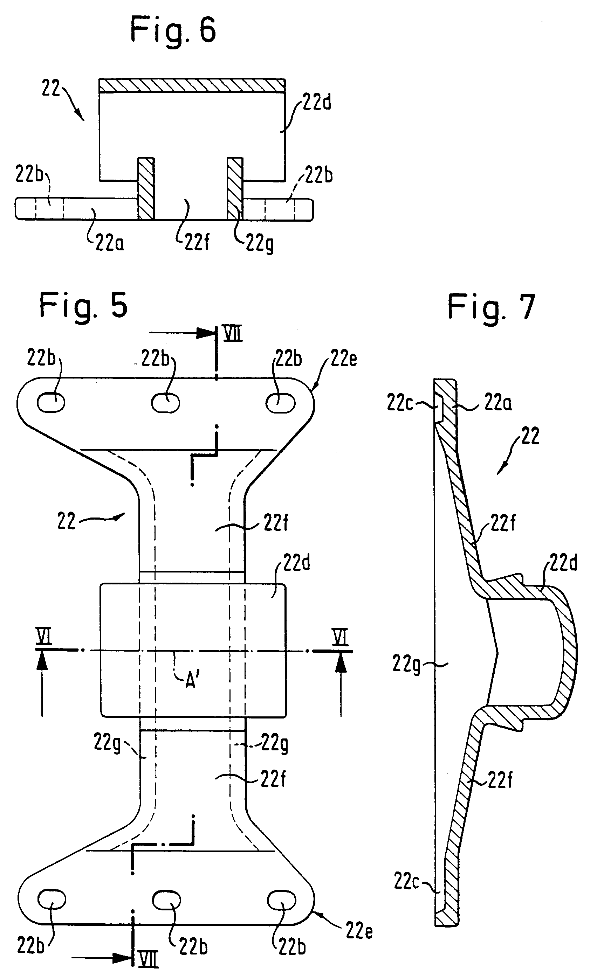

In den Fig. 2 - 4 ist eine Auführungsform eines Bauhöhenadapters 26 in verschiedenen Ansichten dargestellt. Der Bauhöhenadapter 26 ist bezüglich einer im eingebauten Zustand gemäß Fig. 8 des Bauhöhenadapters quer zur Fahrtrichtung verlaufenden, vertikalen Symmetrieebene A symmetrisch ausgebildet und umfaßt zwei Befestigungsteile 26d. Die beiden Befestigungsteile 26d umfassen die Befestigungsbohrungen 26a, die Gegenanschlagflächen 26b für die Anschlagflächen 36a der Schubbleche 36 und auf ihrer Oberseite (s. Draufsicht gemäß Fig. 2) die reliefartigen Erhöhungen 26c, welche zur formschlüssigen Verbindung mit den Fußteilen 22a der Lagerböcke 22 dienen. Wie aus Fig. 4 zu ersehen ist, weisen die beispielsweise als Gußteile gefertigten Bauhöhenadapter 26 an ihrer Unterseite unterhalb der reliefartigen Erhöhungen 26c Ausnehmungen 26e auf, die den reliefartigen Erhöhungen 26c entsprechend ausgebildet sind. Somit ist es möglich, daß mehrere übereinander angeordnete Bauhöhenadapter 26 miteinander in formschlüssige Verbindung treten. Die beiden Befestigungsteile 26d sind durch zwei im montierten Zustand gemäß Fig. 8 in Fahrtrichtung verlaufende Längsstege 26f miteinander verbunden, die im Bereich der Symmetrieebene A über einen Quersteg 26g in Verbindung stehen. Die Längsstege sind aus Gewichtsgründen relativ schmal ausgebildet. Der Quersteg 26g ist vorgesehen, um den Bauhöhenadaptern eine stabilere Form zu verleihen. In den Fig. 5 - 7 sind verschiedene Ansichten eines Lagerbocks 22 dargestellt. Der Lagerbock 22 ist um eine im montierten Zustand gemäß Fig. 8 im wesentlichen quer zur Fahrtrichtung verlaufende, vertikale Symmetrieebene A' symmetrisch ausgebildet. Lagerbock 22 und Bauhöhenadapter 26 weisen im wesentlichen den gleichen Umriß auf (vgl. Fig. 2 und 5). Der Lagerbock 22 umfaßt neben dem Fußteil 22a ein Kopfteil 22d, welches zur Lagerung der Sattelplatte 24 dient. Das Fußteil 22a umfaßt zwei Befestigungsteile 22e, welche die Befestigungsbohrungen 22b und an ihrer Unterseite die reliefartigen Ausnehmungen 22c zur formschlüssigen Verbindung mit dem Bauhöhenadapter 26 aufweisen. Das Fußteil 22a ist dachförmig ausgebildet mit Dachschrägen 22f, die im montierten Zustand gemäß Fig. 8 quer zur Fahrtrichtung durch Seitenwandungen 22g abgeschlossen sind. Die Lagerböcke 22 sind beispielsweise als Gußteile gefertigt; sie müssen jedoch als Funktionsteile aus hochwertigerem Gußmaterial gefertigt sein als die Bauhöhenadapter 26.

Im montierten Zustand des Sattelkupplungsbausatzes 30 gemäß Fig. 8 greifen die reliefartigen Vorsprünge 26c der Bauhöhenadapter 26 in die entsprechenden Ausnehmungen 22c der Lagerböcke 22 zur formschlüssigen Verbindung mit diesen ein. Die Seitenwandungen 22g der Lagerböcke 22 liegen auf den Längsstegen 26f der Bauhöhenadapter auf und übertragen die beispielsweise von einem Sattelauflieger (nicht dargestellt) ausgeübten und über die Sattelplatte 24 auf die Lagerböcke 22 weitergeleiteten Vertikalkräfte auf diese Längsstege 26f der Bauhöhenadapter 26. Die Bauhöhenadapter 26 liegen im Bereich ihres Querstegs 26g auf einer der trapezförmigen Rippen der wellenförmigen Montageplatte 12 auf und leiten die Vertikalkräfte an die Montageplatte weiter. Es ergibt sich somit ein in sich stabiler Aufbau, bei dem nicht die Gefahr besteht, daß die Lagerböcke 22 in der Mitte zwischen den Befestigungen 32 einknicken. Wie bereits vorstehend erwähnt, sind zur Aufnahme von beim Betrieb der Sattelkupplung auftretenden Zug- und Schubkräfte in Fahrtrichtung vor und hinter dem Bauhöhenadapter 26 Schubbleche 36 auf die Montageplatte 12 aufgeschweißt, die in formschlüssiger Verbindung mit den Bauhöhenadaptern 26 stehen. Die Lagerung der Sattelplatte 24 auf den Lagerböcken 22 ist im Stand der Technik bekannt. Es wird hierzu beispielsweise auf die EP 0 051 113 A1 verwiesen. Es soll daher hierauf an dieser Stelle nicht näher eingegangen werden.

## Patentansprüche

1. Sattelzugfahrzeug, umfassend einen Zugfahrzeugrahmen (16) mit mindestens zwei Längsträgern (14) und einem auf dem Zufahrzeugrahmen (16) angeordneten Sattelkupplungsbausatz (30), letzterer ausgeführt mit Lagerböcken (22) und einer auf den Lagerböcken (22) um eine quer zur Fahrtrichtung verlaufende Achse schwenkbar gelagerten Sattelplatte (24), wobei die Lagerböcke (22) mit in Fahrtrichtung länglichen Fußteilen (22a) im Bereich der Längsträger (14) oberhalb dieser an dem Zugfahrzeugrahmen (16) befestigt sind und wobei die Höhe der Auflagefläche der Sattelplatte (24) über den Längsträgern (14) variabel ist,
**dadurch gekennzeichnet**,
daß die Höhe der Auflagefläche durch annähernd dem Umriß der Fußteile (22a) entsprechende, in Fahrtrichtung längliche, den einzelnen Fußteilen (22a) zuzuordnende Bauhöhenadapter (26) variabel ist, welche einerseits mit dem jeweiligen Fußteil (22a) und andererseits mit dem Zugfahrzeugrahmen (16) zumindest bezüglich der Fahrtrichtung in formschlüssige Verbindung treten.

2. Sattelzugfahrzeug nach Anspruch 1,
**dadurch gekennzeichnet**,
daß die Höhe der Auflagefläche durch Bauhöhenadapter (26) unterschiedlicher Höhe variabel ist.

3. Sattelzugfahrzeug nach Anspruch 1,
**dadurch gekennzeichnet**,
daß die Höhe der Auflagefläche durch Übereinanderanordnung zweier oder mehrerer Bauhöhenadapter (26) variabel ist, die ihrerseits zumindest bezüglich der Fahrtrichtung miteinander in formschlüssige Verbindung treten.

4. Sattelzugfahrzeug nach einem der Ansprüche 1 - 3,
**dadurch gekennzeichnet**,
daß die Bauhöhenadapter (26) zur Anbringung auf einer Montageplatte (12) ausgebildet sind, welche auf den Längsträgern (14) befestigt ist.

5. Sattelzugfahrzeug nach Anspruch 4,
**dadurch gekennzeichnet**,
daß die Montageplatte (12) auf den Längsträgern (14) durch Hilfsrahmenteile (18) befestigt ist.

6. Sattelzugfahrzeug nach einem der Ansprüche 1 - 5,
**dadurch gekennzeichnet**,
daß die Fußteile (22a) auf dem Zugfahrzeugrahmen (16) durch Zugbolzen (32a) befestigt sind, welche die Fußteile (22a) und die Bauhöhenadapter (26) durchdringen, und daß zur formschlüssigen Festlegung der Fußteile (22a) an dem jeweiligen Bauhöhenadapter (26) und zur formschlüssigen Festlegung des jeweiligen Bauhöhenadapters (26) an dem Zugfahrzeugrahmen (16) in Fahrtrichtung und ggf. quer zur Fahrtrichtung wirksame Anschlagflächen an den Fußteilen (22a), den Bauhöhenadaptern (26) und dem Zugfahrzeugrahmen (16) vorgesehen sind.

7. Sattelzugfahrzeug nach Anspruch 6,
**dadurch gekennzeichnet**,
daß die Anschlagflächen zwischen den Fußteilen (22a) und den Bauhöhenadaptern (26) sowie ggf. zwischen in Höhenrichtung aufeinanderfolgenden Bauhöhenadaptern (26) durch reliefartige Gestaltung der aneinander anliegenden Flächen (22c,26c,26e) von Fußteilen (22a) und Bauhöhenadaptern (26) gebildet sind.

8. Sattelzugfahrzeug nach Anspruch 6 oder 7,
**dadurch gekennzeichnet**,
daß die Anschlagflächen (34a,36a) zwischen den Bauhöhenadaptern (26) und dem Zugfahrzeugrahmen (16) auf dem Zugfahrzeugrahmen (16) und ggf. auf einer von dem Zugfahrzeugrahmen (16) getragenen Montageplatte (12) durch Schweißen angebracht sind.

9. Sattelzugfahrzeug nach einem der Ansprüche 6 - 8,
**dadurch gekennzeichnet**,
daß die Zugbolzen (32a) von Bohrungen (22b,26a,12b) der Fußteile (22a), der Bauhöhenadapter (26) und des Zugfahrzeugrahmens (16), ggf. der Montageplatte (12), mit solchem Übermaß aufgenommen sind, daß Kräfte in Fahrtrichtung und ggf. quer zur Fahrtrichtung ausschließlich von den Anschlagflächen (22c,26c,26e,34a,36a) aufgenommen werden.

10. Sattelzugfahrzeug nach einem der Ansprüche 6 - 9,
**dadurch gekennzeichnet**,
daß die Anschlagfläche (36a) des Zugfahrzeugrahmens (16) zum wahlweisen oder gleichzeitigen Eingriff mit entsprechenden Gegenanschlagflächen (26b) des Fußteils (22a) und des bzw. der dem Fußteil (22a) zugehörigen Bauhöhenadapter (26) ausgebildet sind.

11. Sattelzugfahrzeug nach einem der Ansprüche 1 - 10,
**dadurch gekennzeichnet**,
daß die Bauhöhenadapter (26) als Gußteile ausgebildet sind.

12. Sattelzugfahrzeug nach einem der Ansprüche 1 - 11,
**dadurch gekennzeichnet**,
daß die Bauhöhenadapter (26) zu einer im eingebauten Zustand quer zur Fahrtrichtung verlaufenden, vertikalen Symmetrieebene (A) oder/und zu einer in Fahrtrichtung verlaufenden, vertikalen Symmetrieebene symmetrisch ausgebildet sind.

13. Sattelzugfahrzeug nach einem der Ansprüche 1 - 12,
**dadurch gekennzeichnet**,
daß die Bauhöhenadapter (26) einen schlanken mittleren Längsabschnitt (26f) und zwei Endabschnitte (26d) mit Bohrbildern (26a) für sie durchsetzende Zugbolzen (32a) aufweisen.

14. Sattelzugfahrzeug nach Anspruch 13,
**dadurch gekennzeichnet**, daß zwischen jeweils zwei von insgesamt drei Bohrungen (26a) in jedem Endabschnitt (26d) Positionierungsreliefs (26c,26e) angeordnet sind mit jeweils einer erhabenen Reliefzone (26c) in einer Anlagefläche und einer versenkten Reliefzone (26e) in der anderen Reliefzone.

15. Sattelkupplungsbausatz (30) zur Verwendung in einem Sattelzugfahrzeug, insbesondere nach einem der Ansprüche 1 - 14,
dieser Bausatz (30) umfassend mindestens zwei Lagerböcke (22) und eine auf den Lagerböcken (22) um eine quer zur Fahrtrichtung verlaufende Achse schwenkbar gelagerte Sattelplatte (24), wobei die Lagerböcke (22) mit in Fahrtrichtung länglichen Fußteilen (22a) ausgeführt sind,
**dadurch gekennzeichnet**,
daß jedem der Fußteile (22a) mindestens ein Bauhöhenadapter (26) zugeordnet ist, und daß an den Fußteilen (22a) und den Bauhöhenadaptern (26) Anschlagmittel (22c,26c) zur formschlüssigen Kraftübertragung zwischen den Fußteilen (22a)und den Adaptern (26) zumindest in Fahrtrichtung, vorzugsweise auch in Querrichtung, angebracht sind.

16. Bauhöhenadapter (26) für ein Sattelzugfahrzeug nach einem der Ansprüche 1 - 14 oder für einen Sattelkupplungsbausatz (30) nach Anspruch 15,
mit den Adaptermerkmalen nach einem der vorhergehenden Ansprüche.

## Claims

1. Semitrailer towing vehicle, comprising a towing vehicle chassis (16) with at least two longitudinal members (14) and a fifth wheel coupling kit (30) arranged on the towing vehicle chassis (16) and comprising bearing blocks (22) and a fifth wheel plate (24) which is mounted on the bearing blocks (22) such that it can pivot about an axis extending transversely to the direction of travel, the bearing blocks (22) being fastened via base parts (22a), which are elongate in the direction of travel, to the towing vehicle chassis (16) in the region of and above the longitudinal members (14), and the height of the bearing surface of the fifth wheel plate (24) above the longitudinal members (14) being variable, characterised in that the height of the bearing surface can be varied by overall height adapters (26) which correspond approximately to the contour of the base parts (22a), are elongate in the direction of travel, are to be associated with the individual base parts (22a) and form a positive connection on one side with the respective base part (22a) and on the other with the towing vehicle chassis (16), at least with respect to the direction of travel.

2. Semitrailer towing vehicle according to claim 1, characterised in that the height of the bearing surface can be varied by overall height adapters (26) of different heights.

3. Semitrailer towing vehicle according to claim 1, characterised in that the height of the bearing surface can be varied by superimposing two or more overall height adapters (26), which in turn form a positive connection with one another, at least with respect to the direction of travel.

4. Semitrailer towing vehicle according to one of claims 1 - 3, characterised in that the overall height adapters (26) are formed for mounting on a mounting plate (12) which is fastened to the longitudinal members (14).

5. Semitrailer towing vehicle according to claim 4, characterised in that the mounting plate (12) is fastened to the longitudinal members (14) by auxiliary chassis parts (18).

6. Semitrailer towing vehicle according to one of claims 1 - 5, characterised in that the base parts (22a) are fastened to the towing vehicle chassis (16) by tie bolts (32a) which pass through the base parts (22a) and the overall height adapters (26), and that stop surfaces, which act in the direction of travel and, if applicable, transversely to the direction of travel, are provided on the base parts (22a), the overall height adapters (26) and the towing vehicle chassis (16) to positively secure the base parts (22a) to the respective overall height adapter (26) and to positively secure the respective overall height adapter (26) to the towing vehicle chassis (16).

7. Semitrailer towing vehicle according to claim 6, characterised in that the stop surfaces between the base parts (22a) and the overall height adapters (26) and, if applicable, between overall height adapters (26) following one another in the vertical direction are formed by a relief-like construction of the adjoining surfaces (22c, 26c, 26e) of base parts (22a) and overall height adapters (26).

8. Semitrailer towing vehicle according to claim 6 or 7, characterised in that the stop surfaces (34a, 36a) between the overall height adapters (26) and the towing vehicle chassis (16) on the towing vehicle chassis (16) and, if applicable, on a mounting plate (12) borne by the towing vehicle chassis (16) are mounted by welding.

9. Semitrailer towing vehicle according to one of claims 6 - 8, characterised in that the tie bolts (32a) are held in holes (22b, 26a, 12b) in the base parts (22a), the overall height adapters (26) and the towing vehicle chassis (16) and, if applicable, the mounting plate (12) with an allowance for fit which is such that forces in the direction of travel and, if applicable, transversely to the direction of travel are absorbed solely by the stop surfaces (22c, 26c, 26e, 34a, 36a).

10. Semitrailer towing vehicle according to one of claims 6 - 9, characterised in that the stop surfaces (36a) of the towing vehicle chassis (16) are formed so as to engage alternatively or simultaneously with corresponding mating stop surfaces (26b) of the base part (22a) and of the overall height adapter(s) (26) associated with the base part (22a).

11. Semitrailer towing vehicle according to one of claims 1 - 10, characterised in that the overall height adapters (26) are cast parts.

12. Semitrailer towing vehicle according to one of claims 1 - 11, characterised in that the overall height adapters (26) are symmetrically formed about a vertical plane of symmetry (A) extending transversely to the direction of travel in the installed state and/or about a vertical plane of symmetry extending in the direction of travel.

13. Semitrailer towing vehicle according to one of claims 1 - 12, characterised in that the overall height adapters (26) comprise a slender central longitudinal portion (26f) and two end portions (26d) with hole patterns (26a) for the tie bolts (32a) passing through them.

14. Semitrailer towing vehicle according to claim 13, characterised in that positioning reliefs (26c, 26e) are arranged between two respective of a total of three holes (26a) in each end portion (26d), with a respective raised relief zone (26c) being in a contact surface and a respective sunk relief zone (26e) being in the other relief zone.

15. Fifth wheel coupling kit (30) for use in a semitrailer towing vehicle, in particular according to one of claims 1 - 14, this kit (30) comprising at least two bearing blocks (22) and a fifth wheel plate (24) which is mounted on the bearing blocks (22) such that it can pivot about an axis extending transversely to the direction of travel, the bearing blocks (22) comprising base parts (22a) which are elongate in the direction of travel, characterised in that at least one overall height adapter (26) is associated with each of the base parts (22a), and that stop means (22c, 26c) are mounted on the base parts (22a) and the overall height adapters (26) to positively transmit forces between the base parts (22a) and the adapters (26), at least in the direction of travel, but preferably also in the transverse direction.

16. Overall height adapters (26) for a semitrailer towing vehicle according to one of claims 1 - 14 or for a fifth wheel coupling kit (30) according to claim 15, with the adapter features according to one of the preceding claims.

## Revendications

1. Véhicule tracteur de semi-remorque, comprenant un châssis (16) de véhicule tracteur avec au moins deux longerons porteurs (14) et un ensemble de sellette d'attelage (30) disposé sur le châssis (16) de véhicule tracteur, cet ensemble étant réalisé avec des supports de palier (22) et un plateau de sellette (24) monté à pivotement sur les supports de palier (22) autour d'un axe s'étendant transversalement à la direction de marche, les supports de palier (22) étant fixés sur le châssis (16) de véhicule tracteur, par des parties de base (22a) oblongues dans la direction de marche, dans la région des longerons porteurs (14) au-dessus de ces derniers, et la hauteur de la surface de portée du plateau de sellette (24) au-dessus des longerons porteurs (14) étant variable,
**caractérisé** en ce que la hauteur de la surface de portée est variable au moyen d'adaptateurs (26) de hauteur d'installation, associés aux parties de base individuelles (22a), correspondant approximativement au contour des parties de base (22a) et oblongs dans la direction de marche, qui entrent en liaison positive au moins par rapport à la direction de marche avec la partie de base respective (22a) d'une part et avec le châssis (16) de véhicule tracteur d'autre part.

2. Véhicule tracteur de semi-remorque selon la revendication 1, **caractérisé** en ce que la hauteur de la surface de portée est variable au moyen d'adaptateurs (26) de hauteur d'installation de différentes hauteurs.

3. Véhicule tracteur de semi-remorque selon la revendication 1, **caractérisé** en ce que la hauteur de la surface de portée est variable par superposition de deux ou plusieurs adaptateurs (26) de hauteur d'installation, qui entrent eux-mêmes en liaison positive mutuelle au moins par rapport à la direction de marche.

4. Véhicule tracteur de semi-remorque selon l'une quelconque des revendications 1 à 3, **caractérisé** en ce que les adaptateurs (26) de hauteur d'installation sont conçus pour être montés sur une plaque de montage (12) qui est fixée sur les longerons porteurs (14).

5. Véhicule tracteur de semi-remorque selon la revendication 4, **caractérisé** en ce que la plaque de montage (12) est fixée sur les longerons porteurs (14) par des éléments (18) du faux-châssis.

6. Véhicule tracteur de semi-remorque selon l'une quelconque des revendications 1 à 5, **caractérisé** en ce que les parties de base (22a) sont fixées sur le châssis (16) de véhicule tracteur par des boulons tirants (32a) qui traversent les parties de base (22a) et les adaptateurs (26) de hauteur d'installation, et en ce qu'en vue de la fixation en engagement positif des parties de base (22a) sur l'adaptateur respectif (26) de hauteur d'installation et en vue de la fixation en engagement positif de l'adaptateur respectif (26) de hauteur d'installation sur le châssis (16) de véhicule tracteur, des faces de butée actives dans la direction de marche et éventuellement transversalement à la direction de marche sont prévues sur les parties de base (22a), les adaptateurs (26) de hauteur d'installation et le châssis (16) de véhicule tracteur.

7. Véhicule tracteur de semi-remorque selon la revendication 6, **caractérisé** en ce que les faces de butée entre les parties de base (22a) et les adaptateurs (26) de hauteur d'installation, ainsi le cas échéant qu'entre des adaptateurs (26) de hauteur d'installation consécutifs en direction verticale, sont formées par une configuration en relief des faces en application mutuelle (22c, 26c, 26e) des parties de base (22a) et des adaptateurs (26) de hauteur d'installation.

8. Véhicule tracteur de semi-remorque selon la revendication 6 ou 7, **caractérisé** en ce que les faces de butée (34a, 36a) entre les adaptateurs (26) de hauteur d'installation et le châssis (16) de véhicule tracteur sont installées par soudage sur le châssis (16) de véhicule tracteur et, le cas échéant, sur une plaque de montage (12) portée par le châssis (16) de véhicule tracteur.

9. Véhicule tracteur de semi-remorque selon l'une quelconque des revendications 6 à 8, **caractérisé** en ce que les boulons tirants (32a) sont reçus par des perçages (22b, 26a, 12b) des parties de base (22a), des adaptateurs (26) de hauteur d'installation et du châssis (16) de véhicule tracteur, le cas échéant de la plaque de montage (12), avec une surcote telle que des forces dans la direction de marche, et éventuellement transversalement à la direction de marche, sont reçues exclusivement par les faces de butée (22c, 26c, 26e, 34a, 36a).

10. Véhicule tracteur de semi-remorque selon l'une quelconque des revendications 6 à 9, **caractérisé** en ce que les faces de butée (36a) du châssis (16) de véhicule tracteur sont conçues pour l'engagement sélectif ou simultané avec des faces de contre-butée correspondantes (26b) de la partie de base (22a) et du ou des adaptateurs (26) de hauteur d'installation associés à la partie de base (22a).

11. Véhicule tracteur de semi-remorque selon l'une quelconque des revendications 1 à 10, **caractérisé** en ce que les adaptateurs (26) de hauteur d'installation sont réalisés sous la forme de pièces moulées en fonte.

12. Véhicule tracteur de semi-remorque selon l'une quelconque des revendications 1 à 11, **caractérisé** en ce que les adaptateurs (26) de hauteur d'installation sont configurés symétriquement par rapport à un plan de symétrie vertical (A) s'étendant transversalement à la direction de marche à l'état installé, ou/et à un plan de symétrie vertical s'étendant dans la direction de marche.

13. Véhicule tracteur de semi-remorque selon l'une quelconque des revendications 1 à 12, **caractérisé** en ce que les adaptateurs (26) de hauteur d'installation présentent une mince partie longitudinale intermédiaire (26f) et deux parties terminales (26d) pourvues de configurations de perçages (26a) pour les boulons tirants (32a) qui les traversent.

14. Véhicule tracteur de semi-remorque selon la revendication 13, **caractérisé** en ce que des reliefs de positionnement respectifs (26c, 26e) sont chaque fois positionnés entre deux du total de trois perçages (26a) dans chaque partie terminale (26d), et ils présentent chacun une zone de relief en bosse (26c) sur une face d'application et une zone de relief en creux (26e) sur l'autre face d'application.

15. Ensemble de sellette d'attelage (30) à utiliser dans un véhicule tracteur de semi-remorque, notamment selon l'une quelconque des revendications 1 à 14,
cet ensemble (30) comprenant au moins deux supports de palier (22) et un plateau de sellette (24) monté à pivotement sur les supports de palier (22) autour d'un axe s'étendant transversalement à la direction de marche, les supports de palier (22) étant réalisés avec des parties de base (22a) oblongues dans la direction de marche,
**caractérisé** en ce qu'au moins un adaptateur (26) de hauteur d'installation est associé à chacune des parties de base (22a), et en ce que des moyens de butée (22c, 26c) sont prévus sur les parties de base (22a) et les adaptateurs (26) de hauteur d'installation en vue d'une transmission de force par engagement positif entre les parties de base (22a) et les adaptateurs (26) au moins dans la direction de marche, et de préférence également en direction transversale.

16. Adaptateur (26) de hauteur d'installation pour un véhicule tracteur de semi-remorque selon l'une quelconque des revendications 1 à 14 ou pour un ensemble de sellette d'attelage (30) selon la revendication 15, avec les caractéristiques d'adaptateur selon l'une quelconque des revendications précédentes.
